# EUROPÄISCHE PATENTSCHRIFT

(11) **EP 2 036 281 B1**
(45) Veröffentlichungstag und Bekanntmachung des Hinweises auf die Patenterteilung: **04.05.2011**
(21) Anmeldenummer: 07765525.6
(22) Anmeldetag: 20.06.2007
(51) Int. Cl.: H04L 12/58

(54) **VERFAHREN ZUM AUTOMATISIERTEN AUFNEHMEN VON ADRESSEN IN EINE LISTE AKZEPTIERTER SENDER IN EINEM KOMMUNIKATIONSSYSTEM**
METHOD FOR AUTOMATICALLY INCLUDING ADDRESSES IN A LIST OF ACCEPTED SENDERS IN A COMMUNICATION SYSTEM
PROCÉDÉ D'ENREGISTREMENT AUTOMATISÉ D'ADRESSES DANS UNE LISTE D'ÉMETTEURS ACCEPTÉS DANS UN SYSTÈME DE COMMUNICATION

(30) Priorität: 23.06.2006 DE 102006029013
(43) Veröffentlichungstag der Anmeldung: 18.03.2009
(73) Patentinhaber: Nokia Siemens Networks GmbH & Co. KG, 81541 München (DE)
(72) Erfinder: KAUFFMANN, Martina, Beijing, Beijing 100016 (CN); LUKAS, Klaus, 81739 München (DE)
(86) Internationale Anmeldenummer: PCT/EP2007/056163
(87) Internationale Veröffentlichungsnummer: WO 2007/147858

(56) Entgegenhaltungen:
- GB-A- 2 404 052
- US-A1- 2004 255 122
- US-A1- 2005 278 360
- ROHWER T ET AL: "TNG White Paper: Abwehr von Spam over Internet Telephony (SPIT-AL)" INTERNET CITATION, [Online] 31. Januar 2006 (2006-01-31), XP007902521 Gefunden im Internet: URL:http://www.spit-abwehr.de/Whitepaper_S PITAL_20060310.pdf> [gefunden am 2007-06-15]

## Beschreibung

Die Erfindung betrifft ein Verfahren zum automatisierten Aufnehmen von Adressen in eine einem ersten Teilnehmer eines Kommunikationssystems zugeordnete Liste akzeptierter Sender von Nachrichten. Die Erfindung betrifft weiterhin eine Vermittlungsstelle eines Kommunikationssystems mit mindestens einem Computer sowie Computerprogramme mit Programmcode, die zur Durchführung des Verfahrens geeignet sind.

Als Kommunikationssystem wird im Rahmen der Anmeldung eine Netzwerkanordnung mit mindestens zwei Teilnehmergeräten bezeichnet, bei dem Teilnehmer über die Teilnehmergeräte Nachrichten, insbesondere Sprachnachrichten austauschen können. Neben leitungsvermittelnden Netzwerken, wie beispielsweise dem klassischen Telefonnetz, werden zunehmend paketvermittelnde Netzwerke zum Aufbau von Kommunikationssystemen eingesetzt. Ein Beispiel ist hier das Internet, über das nicht nur unidirektionale Textmeldungen, wie z.B. Email, übertragen werden können, sondern über das mit Voice over IP (VoIP) auch bidirektionale Sprachübertragung möglich ist.

In Kommunikationssystemen ist es erstrebenswert, die Teilnehmer vor unerwünschten Nachrichten zu schützen. Das Problem unerwünschter Nachrichten ist in großem Umfang zum ersten Mal in Zusammenhang mit Email-Nachrichten aufgetreten. Unerwünschte Emails, zum Beispiel ungefragt zugesendete Werbeemails, werden auch als Spam-Emails bezeichnet. Um Teilnehmer vor Spam-Mails zu verschonen, ist bei Providern, die Email-Adressen bereitstellen und Email-Nachrichten weiterleiten, bekannt, dass die Emails vor der Weiterleitung auf bestimmte, ihren Werbecharakter verratende Schlagwörter durchsucht werden und entsprechend ausgefiltert werden.

Da Voice over IP über das Internet für den Anwender zum einen kostengünstig durchzuführen ist und zum anderen durch den Einsatz von Computern leicht zu automatisieren ist, ist zu befürchten, dass Teilnehmer von Voice over IP Kommunikationssystemen in Zukunft verstärkt unerwünschte Nachrichten, zum Beispiel Werbeanrufe, erhalten werden. In Anlehnung an die Bezeichnung Spam-Emails werden solche unerwünschten Nachrichten bei Voice over IP SPIT (Spam over IP Telephone) genannt. Da Sprachübertragungen möglichst in Echtzeit geschehen müssen, entfällt die im Zusammenhang mit den Spam-Emails bekannte Filtertechnik, nach der Nachrichten anhand ihres Inhalts analysiert werden. Bekannte Verfahren, die gegen SPIT im Voice over IP-Kommunikationssystem eingesetzt werden, basieren auf Listen mit Anruferadressen, die Teilnehmer eines Kommunikationssystems angeben können. Hier sind Ausschlusslisten (Blacklists) und Akzeptanzlisten (Whitelists) bekannt.

In eine Ausschlussliste werden vom Teilnehmer Absenderadressen solcher Sender hinterlegt, von denen der Teilnehmer keine Nachrichten empfangen möchte. Ist ein Absender einer Nachricht in der Ausschlussliste des angegebenen Empfängers enthalten, kann ein Weiterleiten der Nachricht unterbunden werden. Senderausschlusslisten eignen sich jedoch naturgegeben besser für abgeschlossene Kommunikationssysteme mit einer begrenzten, überschaubaren Teilnehmeranzahl. In anderen Kommunikationssystemen kann zum einen die Anzahl auszuschließender Senderadressen zu groß sein, um sie in einer handhabbaren Liste zu erfassen und zum anderen können die Teilnehmer des Kommunikationssystems zu schnell wechseln, um eine Ausschlussliste jederzeit aktuell zu halten.

Mit einer Akzeptanzliste wird der umgekehrte Weg beschritten. Es wird eine teilnehmerspezifische Liste mit Adressinformationen akzeptierter Sender einer Nachricht geführt. Eine Nachricht eines in dieser Akzeptanzliste geführten Senders wird vorbehaltlos an das entsprechende Teilnehmergerät weitergeleitet. Eine Nachricht eines nicht in der Liste angeführten Senders wird dagegen je nach Ausführungsform entweder unterdrückt oder gesondert behandelt, zum Beispiel auf einen Anrufbeantworter (Voice-Mailbox) umgeleitet.

Nachteilig bei einer Akzeptanzliste ist, dass unter Umständen auch erwünschte Nachrichten nicht vorbehaltlos angenommen werden. Je umfassender eine Akzeptanzliste gefüllt ist, je weniger fällt dieser Nachteil beim praktischen Betrieb ins Gewicht. Ein Problem bei bekannten Akzeptanzlisten ist jedoch, dass Listeneinträge händisch erstellt und bezüglich ihrer Aktualität gepflegt werden müssen. Dieses führt häufig zu unvollständigen Akzeptanzlisten, bei denen die Nachteile (Abblocken eigentlich gewünschter Nachrichten) gegenüber den Vorteilen (Unterdrückung von SPIT) überwiegen.

US 2004/255122 A1 offenbart die Übernahme von Adressen aus einer Adressenliste eines Nachrichten-Servers in eine Liste vertrauenswürdiger Adressen unter Berücksichtigung weiterer Kriterien zur Einschätzung der Vertrauenswürdigkeit dieser Adressen. Dabei wird jedoch nicht berücksichtigt, dass in Kommunikationssystemen eine Vielzahl unterschiedlicher Dienste und Systeme mit unterschiedlichen Adressformaten zum Einsatz kommen und die vorhandenen Adressinformationen deshalb in vielen Fällen nicht direkt verwendbar sind.

Es ist daher eine Aufgabe der vorliegenden Erfindung, ein Verfahren, eine Vermittlungsstelle und Computerprogramme bereitzustellen, durch die ein für den Teilnehmer unaufwändiges automatisches Aufnehmen von innerhalb des Kommunikationssystems zur Adressierung einsetzbaren Adressen in eine teilnehmerspezifische Liste akzeptierter Sender ermöglicht wird.

Die Aufgabe wird gelöst durch die Merkmale der unabhängigen Patentansprüche. Vorteilhafte Ausgestaltungen der Erfindung sind in den jeweiligen abhängigen Ansprüchen gekennzeichnet.

Gemäß einem ersten Aspekt zeichnet sich die Erfindung durch ein Verfahren zum automatisierten Aufnehmen von Adressen in eine einem ersten Teilnehmer eines Kommunikationssystems zugeordnete Liste akzeptierter Sender aus, das die folgenden Schritte aufweist: Es wird eine Datenquelle mit Adressinformationen zu mindestens einem weiteren Teilnehmer des Kommunikationssystems vorgegeben und Adressinformationen aus der Datenquelle extrahiert. Daraufhin wird je eine innerhalb des Kommunikationssystems zur Adressierung einsetzbaren Adresse zu jedem weiteren Teilnehmer aus den Adressinformationen bestimmt und in die dem ersten Teilnehmer zugeordnete Liste akzeptierter Sender aufgenommen. Auf einfache Weise, nämlich lediglich durch Vorgeben der Datenquelle mit Adressinformationen kann so erreicht werden, dass eine Vielzahl von Adressen automatisch in die Liste akzeptierter Sender aufgenommen wird.

In einer vorteilhaften Ausgestaltung des ersten Aspekts wird zusätzlich ein Vertrauensgrad abhängig von der Datenquelle bestimmt und die Adressen weiterer Teilnehmer werden nur dann in die Liste akzeptierter Sender aufgenommen, wenn der Vertrauensgrad vorgegebenen Kriterien genügt. Auf diese Weise wird eine ungefilterten Aufnahme von Adressen aus einer nicht vertrauenswürdigen Datenquelle verhindert, die dazu führen könnte, zu viele Adressen in die Liste akzeptierter Sender aufzunehmen, wodurch die Wirksamkeit der Liste akzeptierter Sender verringert wird.

Bevorzugt wird dabei eine solche Datenquelle als vertrauenswürdig eingestuft, die einem zweiten Teilnehmer zugeordnet ist, der ein Empfänger einer von dem ersten Teilnehmer gesendeten Nachricht ist oder ein Sender einer Nachricht, die vom ersten Teilnehmer angenommen wurde. Auf diese Weise wird ein offensichtlich von dem ersten Teilnehmer dem zweiten Teilnehmer entgegengebrachtes Vertrauen benutzt, um die diesem zweiten Teilnehmer zugeordnete Liste akzeptierter Sender als vertrauenswürdige Datenquelle einzustufen und deren Einträge zu übernehmen. Auf diese Weise wird eine Vertrauenskette aufgebaut, durch die die Adressen akzeptierter Sender innerhalb des Kommunikationssystems automatisch und während des normalen Sende-Empfangs-Betriebs von Nachrichten in die Listen akzeptierter Sender vieler Teilnehmer aufgenommen werden. Beides stellen zudem einfach prüfbare und zuverlässige Kriterien zur Bewertung der Vertrauenswürdigkeit einer Datenquelle dar.

In einer vorteilhaften Ausgestaltung wird zu jedem der weiteren Teilnehmer ein Vertrauensgrad bestimmt und die dem weitern Teilnehmer zugeordnete Adresse wird nur dann in die dem ersten Teilnehmer zugeordnete Liste akzeptierter Sender aufgenommen, wenn der Vertrauensgrad vorgegebenen Kriterien genügt. Auf diese Weise kann die Aufnahme von Adressen differenziert und unter Berücksichtigung teilnehmerspezifischer Vertrauensmerkmale vorgenommen werden. In bevorzugten Ausgestaltungen werden solche Vertrauensmerkmale abhängig von den Adressinformationen zu dem weiteren Teilnehmer bestimmt oder anhand eines in den Adressinformationen zu dem weiteren Teilnehmer vorhandenen Zertifikats.

In weiteren vorteilhaften Ausgestaltung des ersten Aspekts ist die Datenquelle ein Telefon oder Adressverzeichnis oder ein Email-Verzeichnis. Telefon-, Adress- oder Email-Verzeichnisse weisen häufig eine Vielzahl von Adressinformationen auf und können als vertrauenswürdige Datenquellen eingestuft werden, insbesondere wenn es sich um Verzeichnisse einer Firma oder Organisation handelt, die dem ersten Teilnehmer bekannt ist. Weiterhin bevorzugt ist die Datenquelle eine einem zweiten Teilnehmer zugeordnete Liste akzeptierter Sender.

In weiteren vorteilhaften Ausgestaltung des ersten Aspekts werden den Adressen in der Liste akzeptierter Sender ein Verweis auf die Datenquelle und/oder eine Gültigkeitsdauer hinzugefügt wird und/oder umgekehrt der Datenquelle ein Verweis auf die Liste akzeptierter Sender. Dadurch wird eine einfache Aktualisierung der Liste akzeptierter Sender ermöglicht.

In einer weiteren vorteilhaften Ausgestaltung werden Adressen komprimiert, bevor sie in die Liste akzeptierter Sender aufgenommen werden. Weiter werden Adressen bevorzugt nur dann in die Liste akzeptierter Sender aufgenommen, wenn sie noch nicht von der Liste akzeptierter Sender umfasst sind. Ebenfalls bevorzugt ist, mehrere Adressen in Form eines Adresseintrags in die Liste akzeptierter Sender aufzunehmen, wobei der Adresseintrag geeignet ist, Adressbereiche anzugeben. Besonders bevorzugt werden dazu Platzhalter zur Angabe von Adressbereichen eingesetzt werden.

Gemäß einem zweiten und dritten Aspekt der Erfindung wird die Aufgabe gelöst durch eine Vermittlungsstelle für ein Kommunikationssystem sowie durch ein Computerprogramm mit Programmcode zur Ausführung eines Programms auf mindestens einem Computer einer Vermittlungsstelle eines Kommunikationssystems. Vermittlungsstelle und Computerprogramm zeichnen sich dadurch aus, dass eines der zuvor beschriebenen Verfahren durchgeführt wird.

Gemäß einem vierten Aspekt der Erfindung wird die Aufgabe gelöst durch ein Computerprogramm mit Programmcode zur Ausführung eines Programms auf einem Teilnehmergerät, das zum Betrieb in einem Kommunikationssystem geeignet ist und sich dadurch auszeichnet, dass bei der Ausführung des Programmcodes eines der zuvor geschilderten Verfahren durchgeführt wird. Die Vorteile des zweiten, dritten und vierten Aspekts entsprechen denen des ersten Aspekts.

Die Erfindung wird nachfolgend anhand von Ausführungsbeispielen mit Hilfe von drei Figuren näher erläutert. Die Figuren zeigen:
- Figur 1: einen Ausschnitt aus einem Kommunikationssystem mit Vermittlungsstellen und Teilnehmergeräten in einer schematischen Darstellung,
- Figur 2: ein Flussdiagramm eines ersten Ausführungsbeispiels eines Verfahrens zum automatisierten Aufnehmen von Adressen in eine Liste akzeptierter Sender und
- Figur 3: ein Flussdiagramm eines zweiten Ausführungsbei- spiels eines Verfahrens zum automatisierten Aufneh- men von Adressen in eine Liste akzeptierter Sender.

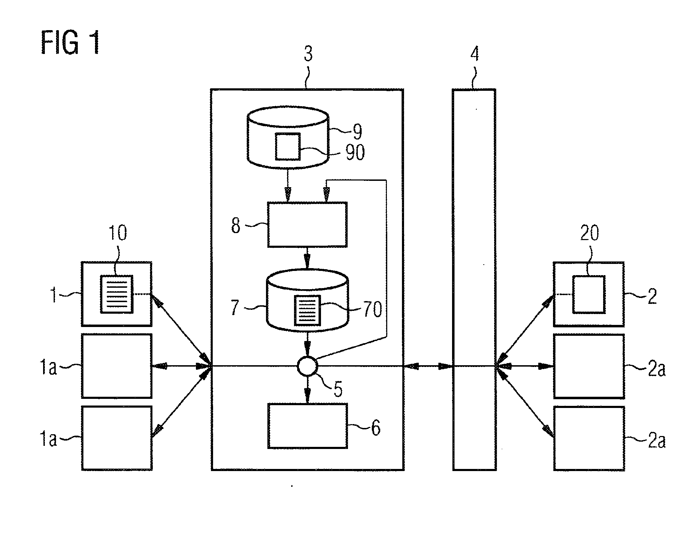

In Figur 1 ist schematisch ein Kommunikationssystem mit einem ersten Teilnehmergerät 1 und einem zweiten Teilnehmergerät 2 dargestellt, die über eine Vermittlungsstelle 3 und eine weitere Vermittlungsstelle 4 miteinander verbindbar sind. Im ersten Teilnehmergerät 1 ist eine lokale Liste akzeptierter Sender 10 vorgesehen. Das zweite Teilnehmergerät 2 weist einen Datensatz 20 auf. Darüber hinaus sind weitere Teilnehmergeräte 1a und 2a vorgesehen, wobei die weiteren Teilnehmergeräte 1a ebenso wie das erste Teilnehmergerät 1 an der Vermittlungsstelle 3 und die weiteren Teilnehmergeräte 2a ebenso wie das zweite Teilnehmergerät 2 mit der weiteren Vermittlungsstelle 4 verbunden sind. Die Vermittlungsstelle 3 umfasst eine Vermittlungseinheit 5 und eine mit dieser verbundene Mailbox 6. Die vermittlungsstelle 3 umfasst weiter eine Datenbank 7, die eine globale Liste akzeptierter Sender 70 aufweist, eine Adressenverarbeitungseinheit 8 und eine Datenbank 9, die einen Datenquelle 90 aufweist. Die Adressenverarbeitungseinheit 8 ist sowohl mit der Datenbank 7, als auch mit der Datenbank 9 verbunden. Weiterhin ist eine Abzweigung von der Verbindung der beiden Teilnehmer 1 und 2 zur Adressenverarbeitungseinheit 8 vorgesehen. Die Begriffe Teilnehmer und Teilnehmergerät werden im Rahmen der Anmeldung teilweise synonym gebraucht, wenn die Unterscheidung für den betrachteten Zusammenhang unerheblich ist beziehungsweise sich aus dem Zusammenhang ergibt.

Bei der in Figur 1 gezeigten Anordnung sind der Übersichtlichkeit halber nur zwei Vermittlungsstellen mit jeweils drei zugeordneten Teilnehmergeräten gezeigt, wohingegen üblicherweise einer Vermittlungsstelle eine Vielzahl von Teilnehmergeräten zugeordnet sein kann und das Kommunikationssystem eine größere Anzahl an Verbindungsstellen aufweisen kann. Im Ausführungsbeispiel sind das erste und die weiteren Teilnehmergerät 1, 1a der Vermittlungsstelle 3 zugeordnet und das zweite und die weiteren Teilnehmergeräte 2, 2a der weiteren Vermittlungsstelle 4, wie durch die verbindenden, einen Datenaustausch über ein Netzwerk symbolisierenden Pfeile gekennzeichnet ist. Als Netzwerke können sowohl paketorientierte Netzwerke (z.B. Internet, GSM, UMTS) als auch leitungsorientierte Netzwerken (z.B. analoges Telefon, ISDN) eingesetzt werden. Häufig sind Vermittlungsstellen für einen so genannten heterogenen Netzwerkbetrieb ausgelegt, in dem sie unterschiedliche Schnittstellen (Gateways) bereitstellen die einen Datenaustausch über verschiedenartige Netzwerke erlauben. Der Einfachheit halber wird im Folgenden von einer Situation ausgegangen, bei der die Vermittlungsstelle 3 und die weitere Vermittlungsstelle 4 zur VoIP-Kommunikation eingerichtet sind und Daten untereinander und mit dem ersten, zweiten und weitern Teilnehmergeräten 1, 2, 1a und 2a über ein paketvermittelndes Netzwerk ausgetauscht werden.

Die Vermittlungsstelle 3 kann dabei allgemein zugänglich sein, z.B. wenn sie von einem öffentlich agierenden VoIP-Provider bereitgestellt wird. Es ist aber auch denkbar, dass die Vermittlungsstelle 3 nur für Teilnehmer innerhalb eines abgeschlossenen Teilnetzes des Internets, z.B. einem firmeninternen Netzwerk (Intranetz), direkt zugänglich ist. Die Funktionalität der Vermittlungsstelle 3 wird üblicherweise durch ein oder mehrere Computer, im VoIP-Bereich auch häufig Proxy-Server genant, realisiert.

Die Übertragung von Sprachdaten in Echtzeit, zum Beispiel zwischen dem ersten Teilnehmer 1 und dem zweiten Teilnehmer 2, wird in VoIP-Systemen üblicherweise gemäß dem Realtime-Protocol (RTP), das im Request for Comment (RFC) 1889 spezifiziert ist. Dem eigentlichen Austausch der Daten ist ein Sitzungsinitialisierungsprotokoll, auch Signalisierungsprotokoll genannt, vorangestellt. Hier sind beispielsweise Protokolle der H.323-Protokollfamilie, insbesondere das Protokoll H.225 zur Sitzungsinitialisierung, oder das Session Initiation Protocol (SIP) bekannt.

Für alle Teilnehmer, die der Vermittlungsstelle 3 zugeordnet sind (also den ersten Teilnehmer 1 und die weiteren Teilnehmer la), ist die Vermittlungsstelle 3 für einen Verbindungsaufbau von oder zu dem Teilnehmer zuständig. Darüber hinaus ist vorgesehen, in der Vermittlungsstelle 3 teilnehmerspezifische Informationen für die zugeordneten Teilnehmer zu speichern. Zu solchen Informationen können neben der später näher erläuterten globale Liste akzeptierter Sender 70 auch Vermittlungsdaten (z.B. Gesprächsnachweise) und Adress- und Telefonverzeichnisse zählen.

Der eigentliche Verbindungsaufbau wird in der Vermittlungsstelle 3 von der Vermittlungseinheit 5 vorgenommen. Nach einem erfolgten Verbindungsaufbau kann vorgesehen sein, auch die Nachrichtendaten über die Vermittlungseinheit 5 zu leiten. Es ist jedoch ebenfalls denkbar, dass die Vermittlungseinheit 5 lediglich dem Verbindungsaufbau dient und nachfolgende Daten direkt zwischen den Teilnehmern über eine in der Figur nicht gezeigte Netzwerkverbindung ausgetauscht werden. Ein solcher direkter Austausch der Nachrichtendaten ist beispielsweise bei Nutzung des SIP-Protokolls üblich. In einer typischen Implementierung umfasst die Vermittlungseinheit 5 einen oder eine Kombination mehrerer zustandsfreier und/oder zustandsbehafteter Proxy-Server.

Die Vermittlungseinheit 5 ist zum Einen dazu eingerichtet, eine Verbindung zwischen Teilnehmern des Kommunikationssystems aufzubauen, gegebenenfalls mit der Unterstützung weiterer Vermittlungsstellen und innerhalb dieser vorgesehener entsprechender Vermittlungseinheiten. Zum Anderen ist die Vermittlungseinheit 5 dazu eingerichtet, eine Verbindung zwischen einen Teilnehmer und der Mailbox 6 herzustellen, wobei die Mailbox 6 zur Zwischenspeicherung von Sprachnachrichten eingerichtet ist. Die Vermittlungseinheit 5 ist damit in der Lage, eine Nachricht eines Senders, die von dem angegebenen Empfänger unerwünscht sein könnte, auf die Mailbox 6 umzuleiten, statt sie zum Empfänger durchzustellen. Es sei an dieser Stelle darauf hingewiesen, dass das Umleiten von Nachrichten auf die Mailbox 6 nur ein Beispiel dafür ist, wie eine als unerwünscht eingestufte Nachricht behandelt wird. Ebenso ist denkbar, dass als unerwünscht eingestufte Anrufe vollständig zurückgewiesen werden oder dass sie zwar zum Empfänger durchgestellt werden, aber mit einem entsprechenden Hinweis versehen werden, durch den der Empfänger vor dem Annehmen des Anrufes über die Einstufung der Nachricht informiert wird.

Im Folgenden sei beispielhaft von einer Situation ausgegangen, bei der der zweite Teilnehmer 2 den ersten Teilnehmer 1 über VoIP anruft. Ob der Anruf des zweiten Teilnehmers 2 als unerwünscht eingestuft wird, kann anhand verschiedener Kriterien festgelegt werden. Beispielsweise kann vorgesehen sein, ausschließlich die in der Datenbank 7 innerhalb der Vermittlungsstelle 3 geführte und für den ersten Teilnehmer 1 spezifische globale Liste akzeptierter Sender 70, im Folgenden kurz globale Akzeptanzliste 70 genannt, zu berücksichtigen. Die teilnehmerspezifische globale Liste akzeptierter Sender 70 umfasst Adresse von Teilnehmern des Kommunikationssystems, deren Anrufe von dem der erste Teilnehmer 1 erwünscht sind. Die Vermittlungsstelle 3 kann weitere globale Liste akzeptierter Sender weiterer Teilnehmer führen, die jedoch aus Gründen der Übersichtlichkeit in Figur 1 nicht dargestellt sind. Adressen können in der globalen Akzeptanzliste 70 je nach Kommunikationssystem in unterschiedlichsten Formaten angegeben sein, z.B. in Form von Telefonnummern, Namen, oder als E-Mail Adressen oder als SIP-URI (Session Initiation Protocol - Uniform Ressource Identifier). Jedes Format, das auch zur Adressangabe beim Anrufen eingesetzt werden kann, ist prinzipiell geeignet. Bei einem VoIP-System ist bevorzugt das Nummernformat einzusetzen, da üblicherweise in diesem Format die Adressangabe des Anrufers bei dem Verbindungsaufbau übermittelt wird. In allen anderen Fällen müsste zunächst eine Adressumsetzung erfolgen, gegebenenfalls unter Inanspruchnahme eines so genannten Adressauflösungsdienstes, wie z.B. DNS (Domain Name Service) oder ENUM (E.164 to URI Dynamic Delegation Discovery System). Die Adresseinträge können eindeutig und explizit sein, indem sie eine Adresse in ihrer eigentlichen Form, beispielsweise als komplette Telefonnummer, enthalten. Weiterhin ist möglich, Adresseinträge mit Platzhaltern (Wildcards) oder in Form so genannter regulärer Ausdrücke einzusetzen, durch die Adressbereiche definiert werden können.

Falls die Adressangabe des anrufenden zweiten Teilnehmers 2 von einem der Adresseinträge der globalen Akzeptanzliste 70 umfasst wird, wird der Verbindungsaufbau zum ersten Teilnehmer 1 durchgeführt, anderenfalls wird der Anruf auf die Mailbox 6 umgeleitet. Falls, wie in der Figur gezeigt, im ersten Teilnehmergerät zusätzlich eine lokale Liste akzeptierter Sender 10, im Folgenden kurz lokale Akzeptanzliste 10 genannt, vorgesehen ist, sollte eine regelmäßige Synchronisation der lokalen Akzeptanzliste 10 und der globalen Akzeptanzliste 70 erfolgen. Alternativ ist denkbar, dass im Rahmen eines Verbindungsaufbaus von der Vermittlungseinheit 5 die lokale Akzeptanzliste 10 abgefragt wird und sie zusammen mit der globalen Akzeptanzliste 70 bei der Entscheidung berücksichtigt wird, ob ein Anruf durchgestellt oder auf die Mailbox 6 umgeleitet wird. Dieses kann für den Nutzer des ersten Teilnehmergerätes 1 unbemerkt (transparent) geschehen. In allen Fällen kann darüber hinaus vorgesehen sein, neben Akzeptanzlisten auch Ausschlusslisten (Blacklists) auszuwerten. Diese können ebenso sowohl global in der Vermittlungsstelle 3, als auch lokal auf dem entsprechenden Teilnehmergerät eingerichtet sein. Für den Fall, dass die einzelnen Listen in sich widersprüchlich sind, also zum Beispiel ein und dieselbe Absenderadresse sowohl in einer Akzeptanzliste, als auch in einer Ausschlussliste vorhanden ist, kann festgelegt sein, welche der Informationen Priorität bei der Entscheidungsfindung genießt. Diese Festlegung kann entweder für ganze Listen Gültigkeit haben oder für einzelne Einträge getroffen sein. So kann erreicht werden, dass zu Service- oder Dienstzwecken erforderliche Anrufe des Betreibers (Providers) der Vermittlungsstelle 3 nicht durch eine lokale oder globale Ausschlussliste an einer direkten Zustellung gehindert werden können.

Zur Umsetzung eines Verfahrens zum Aufnehmen von Adressen in die globale Akzeptanzliste 70 weist die Vermittlungsstelle 3 die Adress earbeitungseinheit 8 auf. Diese ist dazu eingerichtet, Adressen aus vorgegebenen Datenquellen zu extrahieren, die Vertrauenswürdigkeit der Datenquellen und/oder einzelner Adressen aus den Datenquellen zu bewerten. Abhängig von der Bewertung werden die Adressen aus den Datenquellen in die teilnehmerspezifische globale Akzeptanzliste 70 zu übertragen. Eine Quelle, auf die die Adressverarbeitungseinheit 8 zugreift, ist die Datenquelle 90 aus der Datenbank 9 der Vermittlungsstelle 3. Bei dem Datensatz 90 kann es sich beispielsweise um ein Adress- oder Telefonverzeichnis handeln. Falls die Vermittlungsstelle 3 von einem öffentlich zugänglichen Provider betrieben wird, könnte dieses beispielsweise ein Telefonverzeichnis aller bei diesem Provider angemeldeten Kunden sein. Falls die Vermittlungsstelle 3 eine firmeninterne Vermittlungsstelle ist, könnte es sich um ein Mitarbeitertelefonbuch dieser Firma und/oder bekannter Firmen und Organisationen handeln, die grundsätzlich als vertrauenswürdig eingestuft werden.

Eine weitere Quelle, auf die die Adressverarbeitungseinheit 8 zugreifen kann, ist die Datenquelle 20 des zweiten Teilnehmergeräts 2. Adressinformationen aus der zweiten Datenquelle 20 werden der Adressverarbeitungseinheit 8 über die Vermittlungsstelle 3, ggf. unter Mithilfe der Vermittlungseinheit 5, bereitgestellt. Bei der Datenquelle 20 kann es sich beispielsweise um ein lokal vom zweiten Teilnehmer 2 gespeichertes Telefon- oder Adressverzeichnis oder auch um eine lokale Liste akzeptierter Sender des zweiten Teilnehmers 2 handeln.

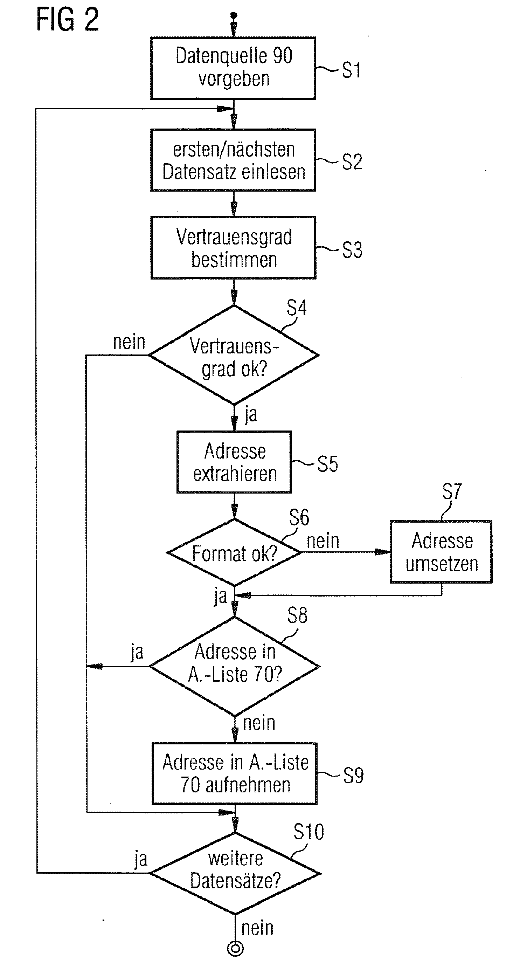

In Figur 2 ist ein erstes Ausführungsbeispiels eines Verfahrens zum automatisierten Aufnehmen von Adressen in eine Liste akzeptierter Sender anhand eines Flussdiagramms detaillierter dargestellt.

Beispielhaft ist das Verfahren für die in Figur 1 gezeigte Situation beschrieben, wobei Adressen (hier Telefonnummern) in die globale Akzeptanzliste 70 des ersten Teilnehmers 1 übertragen werden. Die Vermittlungsstelle 3 sei dabei eine firmeninterne Vermittlungsstelle für eine VoIP-Telefonanlage mit den firmeninternen ersten und weiteren Teilnehmergeräten 1 und la. Die Datenquelle 90 sei ein firmeninternes (Mitarbeiter-) Telefonbuch, in dem Datensätze mit Telefonnummern der weiteren Teilnehmergeräten 1a (und des ersten Teilnehmergerätes 1) samt zugeordneter weiterer Informationen gelistet sind. Solche zugeordneten weiteren Informationen können beispielsweise eine Raumnummer, Raumart (z.B. Besprechungszimmer), einen Namen des Teilnehmers und auch seine Funktion, Position und/oder Abteilung innerhalb der Firma betreffen. Durchgeführt wird das Verfahren mit Ausnahme von Schritt S1 von der Adressverarbeitungseinheit 8.

In einem ersten Schritt S1 wird zunächst die Datenquelle 90 der Adressverarbeitungseinheit 8 vorgegeben.

In einem Schritt S2 wird ein erster, einem der weiteren Teilnehmer 1a zugeordneter Datensatz aus der Datenquelle 90 von der Adressverarbeitungseinheit 8 eingelesen. In einem folgenden Schritt S3 wird ein Vertrauensgrad aus dem Datensatz abgeleitet. Der Vertrauengrad wird dabei nach vorgegebenen Kriterien aus den weiteren Informationen des Datensatzes bestimmt. Beispielsweise kann der Vertrauengrad abhängig von der Position des weiteren Teilnehmers 1a innerhalb der Firma aus einer vorgegeben Tabelle entnommen werden. Auch kann der Vertrauengrad von der Abteilung oder von der Raumart abhängig sein. Beispielsweise wäre sinnvoll, Teilnehmergeräten, die in Besprechungszimmern lokalisiert sind und innerhalb der Firma frei zugänglich sind, mit einem nur niedrigen Vertrauensgrad zu belegen. Auch ist denkbar, Informationen über den Teilnehmer, dessen Akzeptanzliste im Rahmen dieses Verfahrens mit Adressen gefüllt werden soll (hier der erste Teilnehmer 1), mit in die Bestimmung des Vertrauensgrades einzubeziehen. Zum Beispiel ist möglich, dass Teilnehmern der gleichen Abteilung ein höherer Vertrauensgrad entgegengebracht wird, als Teilnehmern einer inhaltlich entfernten Abteilung.

Ebenfalls ist denkbar, dass Verbindungsdaten, die von einer Vermittlungsstelle üblicherweise registriert und gespeichert werden (z.B. wie die Datenquelle 90 in der Datenbank 9), in die Bestimmung des Vertrauensgrades einbezogen werden. Beispielsweise könnte der Vertrauensgrad eines weiteren Teilnehmers 1a, der von dem ersten Teilnehmer 1 bereits ein- oder mehrfach angerufen wurde, ein höherer Vertrauensgrad entgegengebracht wird, als einem anderen der weiteren Teilnehmer 1a, der noch nie einen Anruf vom ersten Teilnehmer erhalten hat.

Eine weiter Möglichkeit zur Bestimmung von Vertrauensgraden bieten Zertifikate, anhand derer die Identität eines laut einer Datenquelle einem weiteren Teilnehmergerät zugeordneten Teilnehmers überprüft werden kann. Auf das Ausführungsbeispiel bezogen, müsste das Telefonverzeichnis der Datenquelle 90 zur Speicherung von Zertifikate ausgelegt sein. Da Zertifikate auch zu anderen Zwecken, beispielsweise zur Authentifizierung von digitalen Signaturen eingesetzt werden, ist eine solche Voraussetzung häufig bereits gegeben.

In einem Schritt S4 wird dann überprüft, ob der zu dem eingelesenen Datensatz bestimmte Vertrauensgrad vorgegeben Kriterien genügt, also z.B. größer als ein vorgegebener Schwellenwert ist. Dieser Schwellenwert kann dabei wiederum spezifisch für den Teilnehmer vorgegeben sein, dessen Akzeptanzliste durch das Verfahren gefüllt werden soll. Falls der Vertrauensgrad nicht den vorgegeben Kriterien genügt, wird das Verfahren mit einem Schritt S9 fortgesetzt. In dem Schritt S9 wird abgefragt, ob weitere Datensätze in der Datenquelle 90 vorliegen. Falls nicht, endet das Verfahren, falls doch, wird wiederum zu dem Schritt S2 verzweigt, in dem dann ein nächster Datensatz eingelesen wird.

In einem Schritt S5 wird eine dem weiteren Teilnehmer 1a zugeordnete Adresse aus dem eingelesenen Datensatz extrahiert. Dabei wird die Adresse möglichst in einem für die globale Akzeptanzliste 70 bevorzugten Format dem Datensatz entnommen. Für ein VoIP-System bieten sich Telefonnummer als bevorzugtes Format an. Nur wenn keine Adresse in diesem Format im Datensatz angegeben ist, wird die Adresse in einem anderen Format, z.B. als SIP-URI, extrahiert. In einem Schritt S6 wird dann überprüft, ob die Adresse in dem bevorzugten Format extrahiert wurde. Falls ja, wird das Verfahren mit einem Schritt S8 fortgesetzt. Falls nicht, wird zunächst zu einem Schritt S7 verzweigt, in dem eine Anfrage zur Umsetzung der extrahierten Adresse an einen geeigneten Dienst zur Adressumsetzung gesendet wird und die umgesetzte Adresse im bevorzugten Format empfangen wird, bevor das Verfahren ebenfalls mit dem Schritt S8 fortgesetzt wird. Selbst wenn die Vermittlungsstelle 3 so eingerichtet sein sollte, dass Einträge unterschiedlicher Formate innerhalb einer Akzeptanzliste verarbeitet werden könnten, bietet sich eine einmalige Umsetzung vor einer Aufnahme einer Adresse in die Akzeptanzliste aus Gründen der Performance beim Auswerten der Akzeptanzliste an.

In dem Schritt S8 wird danach überprüft, ob die extrahierte und ggf. umgesetzte Adresse bereits in der globalen Akzeptanzliste 70 enthalten ist. Falls die globale Akzeptanzliste 70 Einträge mit Platzhaltern zur Definition von Adressbereichen aufweist, sind diese mit zu berücksichtigen. Wenn die extrahierte Adresse noch nicht in der globale Akzeptanzliste 7 enthalten ist, wird das Verfahren mit einem Schritt S9 fortgesetzt, andernfalls wiederum mit dem Schritt S10 (siehe oben).

In dem Schritt S9 wird die extrahierte Adresse in die globale Akzeptanzliste 70 aufgenommen. Dabei kann vorgesehen sein, die extrahierte Adresse grundsätzlich als einen neuen Eintrag in die globale Akzeptanzliste 70 zu schreiben. Es ist aber auch denkbar, dass bestehende Einträge daraufhin analysiert werden, ob durch eine Modifikation eines bestehenden Eintrags mithilfe eines Platzhalters erreicht werden kann, dass die extrahierte Adresse mit von diesem Eintrag umfasst wird. Weiterhin kann vorgesehen sein, in einen Eintrag einen Verweis auf die Datenquelle 90 aufzunehmen. Falls zu einem späteren Zeitpunkt geplant ist, die globale Akzeptanzliste 70 zu bereinigen, also z.B. obsolete Einträge zu löschen oder Einträge zu aktualisieren, kann dadurch zurückverfolgt werden, aus welcher Datenquelle ein Eintrag stammt und entsprechend seine Aktualität gezielt anhand dieser Datenquelle nachgeprüft werden. Darüber hinaus ist denkbar, Einträge mit einem Zeitstempel (Zeitpunkt der Erstellung) oder einer Gültigkeitsdauer zu versehen. Diese Informationen können bei einer Bereinigung der globale Akzeptanzliste 70 ebenfalls ausgewertet werden. Auf diese Weise können beispielsweise temporäre Änderungen von Adressen im Zuge von Umbaumaßnahmen in die globale Akzeptanzliste 70 aufgenommen werden, ohne befürchten zu müssen, dass die Liste dauerhaft mit diesen Einträgen belastet sein wird. Weiterhin kann vorgesehen sein, einer Datenquelle einen Hinweis auf eine Akzeptanzliste hinzuzufügen, falls Adressen aus der Datenquelle in diese Akzeptanzliste übernommen wurden. Bei Änderungen in der Datenquelle kann gezielt auch die entsprechende Akzeptanzliste aktualisiert werden. Anschließend wird das Verfahren mit dem Schritt S10 fortgesetzt, der entweder zum Einlesen eines weiteren Datensatzes führt oder das Verfahren beendet (siehe oben).

Es kann vorgesehen sein, die Schritte S2 bis S9 einmalig auszuführen, z.B. nachdem der Teilnehmer, dessen Akzeptanzliste mit Adressen gefüllt werden soll, neu in das Kommunikationssystem aufgenommen wurde. Weiterhin kann vorgesehen sein, das Verfahren regelmäßig zu wiederholen, so dass sich Änderungen in der Datenquelle 90 möglichst zeitnah auch in globalen Akzeptanzlisten widerspiegeln. Bei einer Wiederholung kann vorteilhafterweise eine eventuell mitgespeicherte Informationen über die Datenquelle und/oder eine mitgespeicherte Gültigkeitsdauer von Einträgen mit berücksichtigt werden.

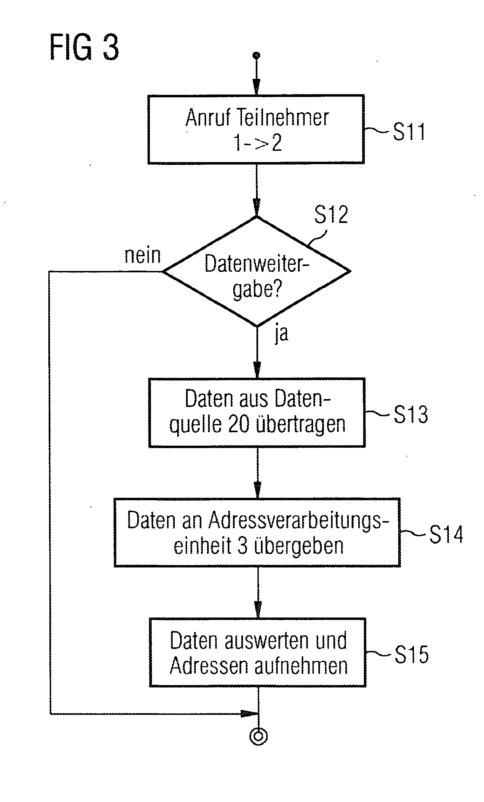

In Figur 3 ist ein zweites Ausführungsbeispiels eines Verfahrens zum automatisierten Aufnehmen von Adressen in eine Liste akzeptierter Sender anhand eines Flussdiagramms detaillierter dargestellt. Beispielhaft ist auch dieses Verfahren anhand des in Figur 1 gezeigten Kommunikationssystems beschrieben.

In einem ersten Schritt S11 des Verfahrens sendet der erste Teilnehmer 1 eine Anfrage zum Verbindungsaufbau zum zweiten Teilnehmer 2. Wie zuvor ausgeführt, ist in diese Anfrage zum Einen die Vermittlungseinheit 5 der Vermittlungsstelle 3 einbezogen, zum Anderen die weitere Vermittlungsstelle 4, der das zweite Teilnehmergerät 2 zugeordnet ist. Im Rahmen des Verbindungsaufbaus stellt die Vermittlungseinheit 5 eine Anfrage an das zweite Teilnehmergerät 2, ob dieses einer Weitergabe von lokal gespeicherten Adressinformationen zustimmt. Dabei ist denkbar, dass eine entsprechende Entscheidung vom Nutzer des zweiten Teilnehmergeräts 2 einmalig getroffen wird und diese Entscheidung in dem zweiten Teilnehmergerät 2 hinterlegt ist. Falls der Vermittlungseinheit 5 keine zustimmende Antwort zurück übermittelt wird, endet das Verfahren.

Falls das zweite Teilnehmergerät 2 zur Übermittlung von lokal gespeicherten Adressinformationen bereit ist, werden solche Adressinformationen in einem Schritt S13 an die Vermittlungsstelle 3 übertragen. Im gezeigten Ausführungsbeispiel überträgt das zweite Teilnehmergerät 2 Daten der Datenquelle 20 an die Vermittlungseinheit 5, wobei die Datenquelle 20 eine lokal gespeicherte Liste akzeptierter Sender des zweiten Teilnehmers 2 ist. In einem Schritt S14 werden diese Daten von der Vermittlungseinheit 5 der Adressverarbeitungseinheit 3 zur Verfügung gestellt.

In einem folgenden letzten Schritt S15 werden in den übermittelten Daten der Datenquelle 20 enthaltener Adressinformationen ausgewertet. Dieses Auswertung erfolgt im Wesentlichen auf die gleiche Art, wie es in den Schritten S2 und S5 bis S10 im Zusammenhang mit Figur 2 beschriebenen ist. Im Unterschied zum ersten Ausführungsbeispiel gemäß Figur 2 wird in diesem Fall kein Vertrauensgrad für jeden Datensatz (also für jeden Eintrag in der Akzeptanzliste des zweiten Teilnehmers) bestimmt. Vielmehr wird aufgrund der Situation, dass der zweite Teilnehmer 2 von dem ersten Teilnehmer 1 angerufen wird, seiner gesamten Akzeptanzliste Vertrauen entgegengebracht. Selbstverständlich könnte aber eine zusätzliche Vertrauensprüfung für die einzelnen Datensätze erfolgen, z.B. indem ein Abgleich mit einer Senderausschlussliste des ersten Teilnehmers 1 erfolgt. So wird verhindert, dass vom ersten Teilnehmer 1 explizit durch die Senderausschlussliste als unerwünschte Anrufer gekennzeichnete Teilnehmer Eingang in seine globale Akzeptanzliste 70 finden.

In einer alternativen Ausführungsform kann das beschriebene Verfahren auch von einer Adressverarbeitungseinheit innerhalb des ersten Teilnehmergerätes 1 durchgeführt werden und dann dem automatischen Auffüllen der lokalen Akzeptanzliste 10 dienen. In einem solchen Fall würde das erste Teilnehmergerät 1 während des Verbindungsaufbaus eine entsprechende Anfrage an das zweite Teilnehmergerät stellen und übermittelte Daten der Datenquelle 20 selber empfangen und auswerten.

## Patentansprüche

1. Verfahren zum automatisierten Aufnehmen von Adressen in eine einem ersten Teilnehmer (1) eines Kommunikationssystems zugeordnete Liste akzeptierter Sender (10, 70) mit den Schritten:
- Vorgeben einer Datenquelle (20, 90) mit Adressinformationen zu mindestens einem weiteren Teilnehmer (1a, 2a) des Kommunikationssystems;
- Einlesen der Adressinformationen aus der Datenquelle (20, 90);
- Bestimmen je einer innerhalb des Kommunikationssystems zur Adressierung einsetzbaren Adresse zu jedem weiteren Teilnehmer (1a, 2a) aus den Adressinformationen, **gekennzeichnet durch**:
- Falls die Adressinformationen keine geeignete Adresse enthalten
-- Übertragen aus der Datenquelle eingelesener Adressinformationen an einen Dienst zur Adressumsetzung;
-- Empfangen von den Adressinformationen zugeordneten, innerhalb des Kommunikationssystems zur Adressierung einsetzbaren und **durch** den Dienst zur Adressumsetzung umgesetzten Adressen, und
- Aufnehmen aller Adressen der weiteren Teilnehmer in die dem ersten Teilnehmer (1) zugeordnete Liste akzeptierter Sender (10, 70).

2. Verfahren nach Anspruch 1, bei dem zusätzlich ein Vertrauensgrad abhängig von der Datenquelle (20, 90) bestimmt wird und bei dem die Adressen weiterer Teilnehmer (1a, 2a) nur dann in die Liste akzeptierter Sender (10, 70) aufgenommen werden, wenn der Vertrauensgrad vorgegebenen Kriterien genügt.

3. Verfahren nach Anspruch 2, bei dem die Datenquelle (20) einem zweiten Teilnehmer (2) zugeordnet ist und bei dem die Datenquelle (20) dann als vertrauenswürdig bestimmt wird, wenn der zweite Teilnehmer (2) ein Empfänger einer von dem ersten Teilnehmer (1) gesendeten Nachricht ist.

4. Verfahren nach Anspruch 2, bei dem die Datenquelle (20) einem zweiten Teilnehmer (2) zugeordnet ist und bei dem die Datenquelle (20) dann als vertrauenswürdig bestimmt wird, wenn der zweite Teilnehmer (2) ein Sender einer von dem ersten Teilnehmer (1) angenommenen Nachricht ist.

5. Verfahren nach Anspruch 1, bei dem zu jedem der weiteren Teilnehmer (1a, 2a) ein Vertrauensgrad bestimmt wird und bei dem eine dem weiteren Teilnehmer zugeordnete Adresse nur dann in die dem ersten Teilnehmer (1) zugeordnete Liste akzeptierter Sender (10, 70) aufgenommen wird, wenn der Vertrauensgrad vorgegebenen Kriterien genügt.

6. Verfahren nach Anspruch 5, bei dem der Vertrauensgrad eines weiteren Teilnehmers abhängig von den Adressinformationen zu dem weiteren Teilnehmer bestimmt wird.

7. Verfahren nach Anspruch 6, bei dem der Vertrauensgrad eines weiteren Teilnehmers anhand eines in den Adressinformationen zu dem weiteren Teilnehmer vorhandenen Zertifikats bestimmt wird.

8. Verfahren nach einem der Ansprüche 1 bis 7, bei dem die Datenquelle ein Telefon- oder Adressverzeichnis ist.

9. Verfahren nach einem der Ansprüche 1 bis 7, bei dem die Datenquelle ein Emailverzeichnis ist.

10. Verfahren nach einem der Ansprüche 1 bis 7, bei dem die Datenquelle (20) eine einem zweiten Teilnehmer (2) des Kommunikationssystems zugeordnete Liste akzeptierter Sender ist.

11. Verfahren nach einem der Ansprüche 1 bis 10, bei dem den Adressen in der Liste akzeptierter Sender (10, 70) ein Verweis auf die Datenquelle (20, 90) hinzugefügt wird.

12. Verfahren nach einem der Ansprüche 1 bis 11, bei dem der Datenquelle ein Verweis auf die Liste akzeptierter Sender (10, 70) hinzugefügt wird.

13. Verfahren nach einem der Ansprüche 1 bis 12, bei dem den Adressen in der Liste akzeptierter Sender (10, 70) eine Gültigkeitsdauer hinzugefügt wird.

14. Verfahren nach einem der Ansprüche 1 bis 13, bei dem die Adressen komprimiert werden, bevor sie in die Liste akzeptierter Sender (10, 70) aufgenommen werden.

15. Verfahren nach einem der Ansprüche 1 bis 14, bei dem die Adressen nur dann in die Liste akzeptierter Sender (10, 70) aufgenommen werden, wenn sie noch nicht von der Liste akzeptierter Sender (10, 70) umfasst sind.

16. Verfahren nach einem der Ansprüche 1 bis 15, bei dem mehrere Adressen in Form eines Adresseintrags in die Liste akzeptierter Sender (10, 70) aufgenommen werden, wobei der Adresseintrag geeignet ist, Adressbereiche anzugeben.

17. Verfahren nach Anspruch 16, bei dem Platzhalter zur Angabe von Adressbereichen eingesetzt werden.

18. Vermittlungsstelle für ein Kommunikationssystem, **dadurch gekennzeichnet, dass**
die Vermittlungsstelle dazu eingerichtet ist, ein Verfahren nach einem der Ansprüche 1 bis 17 durchzuführen.

19. Computerprogramm mit Programmcode zur Ausführung eines Programms auf mindestens einem Computer einer Vermittlungsstelle (3) eines Kommunikationssystems, **dadurch gekennzeichnet, dass**
bei der Ausführung des Programmcodes ein Verfahren nach einem der Ansprüche 1 bis 17 ausgeführt wird.

20. Computerprogramm mit Programmcode zur Ausführung eines Programms auf einem Teilnehmergerät, das zum Betrieb in einem Kommunikationssystem geeignet ist, **dadurch gekennzeichnet, dass**
bei der Ausführung des Programmcodes ein Verfahren nach einem der Ansprüche 1 bis 17 ausgeführt wird.

## Claims

1. Method for automatically including addresses in a list of accepted senders (10, 70) which is associated with a first subscriber (1) in a communication system, having the following steps:
- determining a data source (20, 90) having address information relating to at least one further subscriber (1a, 2a) in the communication system;
- reading the address information from the data source (20, 90);
- determining from the address information for each further subscriber (1a, 2a) a respective address which can be used for addressing within the communication system, **characterized by** the following:
- if the address information does not contain a useable address then
-- transmitting the address information read from the data source to a service for address conversion;
-- receiving addresses which are associated with the address information and which can be used for addressing within the communication system and which have been converted by the service for address conversion, and
- including all the addresses of the further subscribers in the list of accepted senders (10, 70) which is associated with the first subscriber (1).

2. Method according to Claim 1, in which additionally a degree of trust is determined on the basis of the data source (20, 90) and in which the addresses of further subscribers (1a, 2a) are included in the list of accepted senders (10, 70) only if the degree of trust satisfies prescribed criteria.

3. Method according to Claim 2, in which the data source (20) is associated with a second subscriber (2) and in which the data source (20) is determined as trustworthy if the second subscriber (2) is a recipient of a message sent by the first subscriber (1).

4. Method according to Claim 2, in which the data source (20) is associated with a second subscriber (2) and in which the data source (20) is determined as trustworthy if the second subscriber (2) is a sender of a message accepted by the first subscriber (1).

5. Method according to Claim 1, in which a degree of trust is determined for each of the further subscribers (1a, 2a) and in which an address associated with the further subscriber is included in the list of accepted senders (10, 70) which is associated with the first subscriber (1) only if the degree of trust satisfies prescribed criteria.

6. Method according to Claim 5, in which the degree of trust for a further subscriber is determined on the basis of the address information relating to the further subscriber.

7. Method according to Claim 6, in which the degree of trust for a further subscriber is determined using a certificate which is present in the address information relating to the further subscriber.

8. Method according to one of Claims 1 to 7, in which the data source is a telephone or address directory.

9. Method according to one of Claims 1 to 7, in which the data source is an email directory.

10. Method according to one of Claims 1 to 7, in which the data source (20) is a list of accepted senders which is associated with a second subscriber (2) in the communication system.

11. Method according to one of Claims 1 to 10, in which a reference to the data source (20, 90) is added to the addresses in the list of accepted senders (10, 70).

12. Method according to one of Claims 1 to 11, in which a reference to the list of accepted senders (10, 70) is added to the data source.

13. Method according to one of Claims 1 to 12, in which a validity period is added to the addresses in the list of accepted senders (10, 70).

14. Method according to one of Claims 1 to 13, in which the addresses are compressed before they are included in the list of accepted senders (10, 70).

15. Method according to one of Claims 1 to 14, in which the addresses are included in the list of accepted senders (10, 70) only if they are not yet covered by the list of accepted senders (10, 70).

16. Method according to one of Claims 1 to 15, in which a plurality of addresses in the form of an address entry are included in the list of accepted senders (10, 70), said address entry being suitable for indicating address ranges.

17. Method according to Claim 16, in which wildcards are used to indicate address ranges.

18. Exchange for a communication system, **characterized in that** the exchange is set up to carry out a method according to one of Claims 1 to 17.

19. Computer program having program code for executing a program on at least one computer of an exchange (3) in a communication system, **characterized in that** execution of the program code involves a method according to one of Claims 1 to 17 being carried out.

20. Computer program having program code for executing a program on a subscriber terminal which is suitable for operation in a communication system, **characterized in that** execution of the program code involves a method according to one of Claims 1 to 17 being carried out.

## Revendications

1. Procédé d'enregistrement automatisé d'adresses dans une liste d'émetteurs acceptés (10, 70) qui est associée à un premier usager (1) d'un système de communication, comportant les étapes suivantes :
- spécification d'une source de données (20, 90) avec des informations d'adresses sur au moins un autre usager (1a, 2a) du système de communication ;
- lecture des informations d'adresses de la source de données (20, 90) ;
- détermination pour chaque autre usager (1a, 2a), à partir des informations d'adresses, de respectivement une adresse utilisable pour l'adressage dans le système de communication, **caractérisé par** :
- si les informations d'adresses ne contiennent pas d'adresse appropriée :
• la transmission d'informations d'adresses lues de la source de données à un service de conversion d'adresses ;
• la réception d'adresses converties qui sont associées aux informations d'adresses, utilisables pour l'adressage dans le système de communication et converties par le service de conversion d'adresses, et
- l'enregistrement de toutes les adresses des autres usagers dans la liste d'émetteurs acceptés (10, 70) qui est associée au premier usager (1).

2. Procédé selon la revendication 1, dans lequel un degré de confiance est additionnellement déterminé en fonction de la source de données (20, 90) et dans lequel les adresses d'autres usagers (1a, 2a) ne sont enregistrées dans la liste d'émetteurs acceptés (10, 70) que si le degré de confiance satisfait à des critères prédéterminés.

3. Procédé selon la revendication 2, dans lequel la source de données (20) est associée à un deuxième usager (2) et dans lequel la source de données (20) est déterminée comme étant fiable si le deuxième usager (2) est un destinataire d'un message émis par le premier usager (1) .

4. Procédé selon la revendication 2, dans lequel la source de données (20) est associée à un deuxième usager (2) et dans lequel la source de données (20) est déterminée comme étant fiable si le deuxième usager (2) est un émetteur d'un message accepté par le premier usager (1).

5. Procédé selon la revendication 1, dans lequel un degré de confiance est déterminé pour chacun des autres usagers (1a, 2a) et dans lequel une adresse associée à l'autre usager n'est enregistrée dans la liste d'émetteurs acceptés (10, 70) qui est associée au premier usager (1) que si le degré de confiance satisfait à des critères prédéterminés.

6. Procédé selon la revendication 5, dans lequel le degré de confiance d'un autre usager est déterminé en fonction des informations d'adresses relatives à l'autre usager.

7. Procédé selon la revendication 6, dans lequel le degré de confiance d'un autre usager est déterminé à l'aide d'un certificat figurant dans les informations d'adresses relatives à l'autre usager.

8. Procédé selon l'une des revendications 1 à 7, dans lequel la source de données est un répertoire téléphonique ou d'adresses.

9. Procédé selon l'une des revendications 1 à 7, dans lequel la source de données est un répertoire de courriers électroniques.

10. Procédé selon l'une des revendications 1 à 7, dans lequel la source de données (20) est une liste d'émetteurs acceptés qui est associée à un deuxième usager (2) du système de communication.

11. Procédé selon l'une des revendications 1 à 10, dans lequel un renvoi à la source de données (20, 90) est ajouté aux adresses dans la liste d'émetteurs acceptés (10, 70).

12. Procédé selon l'une des revendications 1 à 11, dans lequel un renvoi à la liste d'émetteurs acceptés (10, 70) est ajouté à la source de données.

13. Procédé selon l'une des revendications 1 à 12, dans lequel une durée de validité est ajoutée aux adresses dans la liste d'émetteurs acceptés (10, 70).

14. Procédé selon l'une des revendications 1 à 13, dans lequel les adresses sont comprimées avant d'être enregistrées dans la liste d'émetteurs acceptés (10, 70).

15. Procédé selon l'une des revendications 1 à 14, dans lequel les adresses ne sont enregistrées dans la liste d'émetteurs acceptés (10, 70) que si elles ne sont pas encore incluses dans la liste d'émetteurs acceptés (10, 70) .

16. Procédé selon l'une des revendications 1 à 15, dans lequel plusieurs adresses sont enregistrées dans la liste d'émetteurs acceptés (10, 70) sous la forme d'une entrée d'adresses, l'entrée d'adresses étant adaptée pour indiquer des zones d'adresses.

17. Procédé selon la revendication 16, dans lequel des caractères de remplacement sont utilisés pour indiquer des zones d'adresses.

18. Centre de commutation pour un système de communication, **caractérisé en ce que** le centre de commutation est aménagé pour exécuter un procédé selon l'une des revendications 1 à 17.

19. Programme informatique avec un code de programme pour exécuter un programme sur au moins un ordinateur d'un centre de commutation (3) d'un système de communication, **caractérisé en ce que**, lors de l'exécution du code de programme, un procédé selon l'une des revendications 1 à 17 est exécuté.

20. Programme informatique avec un code de programme pour exécuter un programme sur un appareil d'usager qui est adapté pour fonctionner dans un système de communication, **caractérisé en ce que**, lors de l'exécution du code de programme, un procédé selon l'une des revendications 1 à 17 est exécuté.
